# EUROPÄISCHE PATENTSCHRIFT

(11) **EP 2 398 333 B1**
(45) Veröffentlichungstag und Bekanntmachung des Hinweises auf die Patenterteilung: **01.05.2013**
(21) Anmeldenummer: 09743875.8
(22) Anmeldetag: 27.10.2009
(51) Int. Cl.: A22C 13/00, B32B 27/30

(54) **EIN- ODER MEHRSCHICHTIGE, RÄUCHERBARE, LUFTTROCKENBARE, SCHÄLBARE, INSBESONDERE VOLLAUTOMATISCH SCHÄLBARE, SCHLAUCHFÖRMIGE NAHRUNGSMITTELFOLIE FÜR LEBENSMITTELVERPACKUNGEN SOWIE VERFAHREN ZU DEREN HERSTELLUNG**
SINGLE-LAYER OR MULTILAYER TUBULAR FOOD PACKAGING FILM THAT CAN BE SMOKED, AIR-DRIED, AND PEELED, ESPECIALLY PEELED IN A FULLY AUTOMATIC MANNER, AND METHOD FOR THE PRODUCTION THEREOF
FILM ALIMENTAIRE TUBULAIRE MONO- OU MULTICOUCHE POUVANT ÊTRE FUMÉ, SÉCHÉ À L'AIR ET PELÉ, NOTAMMENT PELÉ DE FAÇON ENTIÈREMENT AUTOMATISÉE, DESTINÉ À DES EMBALLAGES ALIMENTAIRES, ET PROCÉDÉS DE FABRICATION

(30) Priorität: 20.02.2009 DE 102009009859
(43) Veröffentlichungstag der Anmeldung: 28.12.2011
(73) Patentinhaber: Kuhne Anlagenbau GmbH, 53757 St. Augustin/Menden (DE)
(72) Erfinder: SCHIFFMANN, Jürgen, 53773 Hennef (DE)
(74) Vertreter: Kuhnen & Wacker
(86) Internationale Anmeldenummer: PCT/EP2009/007683
(87) Internationale Veröffentlichungsnummer: WO 2010/094309

(56) Entgegenhaltungen:
- WO-A-2007/090934

## Beschreibung

Die vorliegende Erfindung betrifft eine ein- oder mehrschichtige, räucherbare, lufttrockenbare, schälbare, insbesondere vollautomatisch schälbare, schlauchförmige Nahrungsmittelfolie für Lebensmittelverpackungen, insbesondere Wursthülle für geräucherte und/oder luftgetrocknete Wurst- oder Fleischwaren, wobei die Nahrungsmittelfolie auf Polymerbasis auf einer (Co- )Extrusions-Blasfolienanlage mittels einer Düse eines Blaskopfs zugeführter (co-)extrudierter Kunststoffe aus einer homogenen Kunststoffschmelze hergestellt und im Tripple-Bubble-Verfahren biaxial verstreckt ist, nach dem Oberbegriff des Anspruchs 1. Ferner betrifft die Erfindung ein Verfahren zu deren Herstellung nach dem Oberbegriff des Anspruchs 12.

Räucherbare Wursthüllen sind aus der Praxis und dem Schrifttum bekannt. So offenbart die Druckschrift DE 199 42 835 A1 eine Wursthülle aus einem künstlichen Wursthüllenmaterial, wobei hierfür ein gas- und sauerstoffdurchlässiges, weiches Kunststoffmaterial verwendet wird. Das in der DE 199 42 835 A1 beschriebene Wursthüllenmaterial weist eine unregelmäßig gekrümmte Wurstform mit geschweißten Längsnähten auf. Diese Wursthülle soll räucherbar sein und eine ausreichend hohe Festigkeit aufweisen.

Weiterhin ist aus der Druckschrift DE 198 30 389 A1 eine Folie für lufttrocknende, räucherbare Lebensmittel bekannt.

Ferner offenbart die Druckschrift DE 101 25 762 A1 ein Formteil mit einer unregelmäßigen äußeren Kontur, das aus einer doppelt gelegten Folienmaterialbahn aus einem schweißbaren Kunststoff in einer die Materialbahnen verschweißenden und abtrennenden Trennschweißvorrichtung hergestellt wird. Dieses trenngeschweißte Formteil soll eine räucherbare Wursthülle ergeben, die eine ausreichend hohe Festigkeit aufweisen soll.

Des Weiteren ist aus der Druckschrift DE 35 26 394 C2 eine Rohwursthülle bekannt, die aus einem in Längsrichtung zu einem Schlauch zusammengefügten, bindemittelfreien Spinnwirrvlies aus wenigstens einem Polyamid (kurz: PA) hergestellt sein soll. Diese Rohwursthülle soll räucherbar sein.

Dabei wird in der Druckschrift DE 35 26 394 C2 auch auf das Dokument DE 30 29 028 A1 verwiesen, das eine faservliesverstärkte Kunstdarmhülle offenbart, welche räucherbar sein soll. Das hierfür verwendete Faservlies kann auf PA-Basis ausgebildet sein. Besonders geeignet seien Spinnvliese auf Basis von PA und Polypropylen (kurz: PP). Derartige Spinnvliese sind mit einer Beschichtungslösung zu imprägnieren. Als Beschichtungsmaterialien wiederum eignen sich gemäß der Druckschrift DE 30 29 028 A1 alle filmbildenden Polymere, die als Pulver aufgestäubt und anschließend thermisch zu einem Film verschmolzen werden können. Zudem sind solche filmbildende Polymere geeignet, die als Beschichtung in Form einer Schmelze, Lösung, Suspension oder Dispersion aufgebracht und durch eine anschließende Trocknung verfilmt werden können. Dabei würden sich unter anderem als Beschichtungsmaterialien molekulardisperse oder kolloidale Lösungen oder Suspensionen verschiedener Polymere oder Mischungen derselben, wie beispielsweise Polyvinylalkohol (kurz: PVOH), eignen.

Das Dokument DE 42 20 957 A1 offenbart eine Verpackungshülle mit einem flexiblen Trägermaterial, welches mit einer Schaumschicht versehen ist. Als Beschichtungsmaterial soll hierfür vollverseifter PVOH Verwendung finden. Der Schaum dieser Substanz sei wasserfest, fettdicht und für Sauerstoff, Stickstoff und Kohlendioxid im Wesentlichen undurchlässig. Lediglich Wasserdampf könne ungehindert durch die Schaumschicht aus vollverseiftem PVOH durchdringen. Vollverseifter PVOH sei daher für Wursthüllen und insbesondere für Rohwürste geeignet. Auch seien Kombinationen von PVOH mit anderen Kunststoffdispersionen denkbar.

Dagegen offenbart das Dokument WO 00/75220 A1 eine Folienhülle auf Basis eines extrudierten, schlauchförmigen Kunststoffgemischs, bestehend aus PA und Polyetherblockamid (kurz: PEBA). Die angeführte Mischung bringt zwar in der Theorie eine erhöhte Wasserdampfund Sauerstoffdurchlässigkeit bzw. -permeation gegenüber herkömmlichen PA-Mischungen und somit auch eine begrenzte Räucherbarkeit. Aber in der Praxis fehlt jedoch die gewünschte und erforderliche Oberflächeneinfärbung der Wurst- oder Fleischwaren völlig.

Nach den praktischen Erfahrungen der Anmelderin ist die Räucherbarkeit stark abhängig vom PEBA-Anteil, jedoch ist diese selbst bei hohen PEBA-Konzentrationen nicht ausreichend. Nachteilig ist ferner, dass PEBA ein teures und weiches Material ist. Dies führt dazu, dass Mischungen mit einem entsprechend hohen PEBA-Anteil zwar eine bestimmte Räucherbarkeit erlauben. Aber aufgrund der hohen Kosten und insbesondere aufgrund der viel zu geringen Steifigkeit sowie Festigkeit wird einerseits das insbesondere für Wurstwaren erforderliche Raffen der Folie erschwert oder sogar unmöglich gemacht. Andererseits verbietet die geringe Formstabilität die Verwendung dieser Folienhülle für Roh- oder Hartwurst und insbesondere für Salami. Darüber hinaus macht die geringe Schälbarkeit dieser Folienhülle die Verwendung für Siedewurst, wie beispielsweise Hot Dogs, unmöglich.

Demgegenüber offenbart die Druckschrift DE 102 95 683 T5 eine Wursthülle aus einem Gemisch aus PA und einem geringen Anteil an PVOH. Diese Mischung erlaubt zwar im Gegensatz zur Folienhülle gemäß dem Dokument WO 00/75220 A1 eine bestimmte, wenn auch nicht optimale Oberflächeneinfärbung der Wurst- oder Fleischwaren. Die erforderliche Sauerstoff- bzw. Gasdurchlässigkeit ist jedoch deutlich zu gering. Die Wasserdampfdurchlässigkeit ist im Vergleich zu PA- oder PA/PEBA-Mischungen zwar höher, aber dennoch zu gering für den Einsatz als räucherbare Nahrungsmittelfolie. Eine Verbesserung der Oberflächeneinfärbung sowie der Durchlässigkeit für Sauerstoff und/oder Wasserdampf und damit der Räucherbarkeit könnten bei diesem Folienaufbau nur mittels einer drastischen Wandstärkenreduktion erreicht werden. Dies würde sich aber wiederum im gleichen Maße negativ auf die Steifigkeit und/oder Festigkeit und somit auf die Raffbarkeit auswirken, was der Verwendung für Roh- bzw. Hartwurst entgegensteht. Eine Verwendung für Siedewurst, wie z.B. Hot Dogs, ist aufgrund der mangelhaften Schälbarkeit nicht möglich.

Schließlich offenbaren die Dokumente DE 103 02 960 A1, DE 103 20 327 A1 und DE 103 23 417 B3 Nahrungsmittelhüllen, welche ebenfalls auf PA basieren. Zur Verbesserung der Räucherbarkeit werden hierbei dem Grundstoff PA zum Teil eine Mehrzahl weiterer Komponenten wie PVOH und PEBA beigemischt. Das daraus resultierende Gemisch ist hinsichtlich der Oberflächeneinfärbung, der Durchlässigkeit von Sauerstoff und Wasserdampf für einige Anwendungen im Wurstbereich begrenzt nutzbar. Nachteilig bei diesem Folienaufbau ist jedoch die mangelnde Steifigkeit und Festigkeit, da hierbei dem relativ steifen Basismaterial PA zum Teil gleich zwei weiche Komponenten (PVOH, PEBA) zum Erreichen der Räucherbarkeit und Oberflächeneinfärbung beigemengt werden. Selbst eine Zumischung geringer Mengen der beiden Zusatzkomponenten verringert die Steifigkeit und/oder Festigkeit der Folie auf ein für die meisten Anwendungen zu geringes Niveau. Außerdem wäre eine höhere Beimischung der Zusatzkomponenten oder eine Wandstärkenreduktion zur Verbesserung der unzureichenden Räucherbarkeit und Oberflächeneinfärbung erforderlich. Dies wirkt wiederum der Raffbarkeit sowie der für die meisten Anwendungen benötigten Festigkeit negativ entgegen.

Damit sind aus dem Stand der Technik zwar räucherbare Nahrungsmittelhüllen auf Polymer- und insbesondere auf PA-Basis mit PVOH und PEBA bekannt. Jedoch erlauben deren geringe Steifigkeit und damit geringe Raffbarkeit sowie eine in aller Regel unbefriedigende Formstabilität nur einen beschränkten Einsatzbereich. Darüber hinaus eignen sich die für die Rauchaufnahme zu geringe Durchlässigkeit für und Absorption von Wasserdampf und das zu hohe Kostenniveau aufgrund des relativ hohen Preises für PA sowie der für die Steifigkeit benötigten höheren Materialstärke nur beschränkt für die vorgesehenen Einsatzzwecke.

Ferner ist aus dem Stand der Technik zur Verbesserung der mechanischen Eigenschaften von Nahrungsmittelfolien bei der Großserienfertigung der Einsatz von Netzen, flexiblen Trägermaterialien oder Spinnwirrvliesen bekannt. Diese müssen gerade im Falle von Faser- oder Spinnvliesen häufig aufwändig verdichtet oder beschichtet werden. Hierdurch kann jedoch deren geringe Steifigkeit nicht ausreichend erhöht werden, wodurch das Raffen stark erschwert wird und insbesondere ein netzloses Raffen von kleinen Kalibern schlichtweg unmöglich ist. Demzufolge sind derlei bekannte Wursthüllen bis heute nicht maschinell weiterverarbeitbar.

Darüber hinaus weisen die vorstehend beschriebenen Nahrungsmittelhüllen eine viel zu hohe Bräthaftung sowie eine deutlich zu geringe Reiß- und/oder Spleißneigung in Maschinenrichtung und/oder in Längsrichtung der Wurst auf. Hierdurch wird eine mangelhafte oder überhaupt keine Schälbarkeit, insbesondere bei Verwendung von Stütznetzen, Fasern oder Spinnfließen, verursacht.

Aufgabe der vorliegenden Erfindung ist es daher, eine ein- oder mehrschichtige, räucherbare, lufttrockenbare, schälbare, insbesondere vollautomatisch schälbare, schlauchförmige Nahrungsmittelfolie für Lebensmittelverpackungen vorzuschlagen, die in großen Mengen kostengünstig aus einer Kunststoffschmelze in industrieller Massenproduktion hergestellt werden kann, wobei die Nahrungsmittelfolie die Kernparameter wie Räucherbarkeit, welche durch die Sauerstoff- und Wasserdampfdurchlässigkeit sowie die Sauerstoff- und Wasserdampfabsorption bestimmt wird, Oberflächeneinfärbung des Füllgutes, Steifigkeit und/oder Festigkeit (Formstabilität) und insbesondere Schälbarkeit verwirklicht, die nachfolgend maschinell weiterverarbeitbar und vollautomatisch schälbar ist. Ferner ist es eine Aufgabe, ein hierfür geeignetes Verfahren anzugeben.

Diese Aufgabe wird gelöst durch die Merkmale des Anspruchs 1 als auch in verfahrenstechnischer Hinsicht durch die Merkmale des Anspruchs 12.

Erfindungsgemäß wird hierbei eine ein- oder mehrschichtige, räucherbare, lufttrockenbare, schälbare, insbesondere vollautomatisch schälbare, schlauchförmige Nahrungsmittelfolie, insbesondere Wursthülle für geräucherte und/oder luftgetrocknete Wurst- oder Fleischwaren, vorgeschlagen, wobei die Nahrungsmittelfolie auf einer (Co-)Extrusions-Blasfolienanlage mittels einer Düse eines Blaskopfs zugeführter, (co-)extrudierter Kunststoffe aus einer homogenen Kunststoffschmelze hergestellt und im Tripple-Bubble-Verfahren biaxial verstreckt ist. Dabei wird die homogene Kunststoffschmelze aus einer Kunststoffmischung aus Polstyrol (kurz: PS) oder einer Mischung verschiedener PS und PVOH und/oder PEBA hergestellt.

Damit wird in vorteilhafter Weise nicht nur die großtechnische Herstellung von räucherbaren, lufttrockenbaren, schälbaren, insbesondere vollautomatisch schälbaren, schlauchförmigen Nahrungsmittelfolien für Lebensmittelverpackungen erstmals im Düsenblasverfahren und anschließender biaxialer Verstreckung im Tripple-Bubble-Verfahren ermöglicht. Sondern es kann gänzlich auf die vorstehend diskutierten, als bei der Großserienfertigung besonders nachteilig empfundenen Netze, flexible Trägermaterialien oder Spinnwirrvliese verzichtet werden. Mit der erfindungsgemäßen Nahrungsmittelfolie wird somit erstmals eine bisher nicht verfügbare, schälbare und erst recht nicht verfügbare, vollautomatisch bzw. vollmaschinell schälbare Nahrungsmittelfolie bereitgestellt.

Darüber hinaus können in besonders vorteilhafter Weise die bekannten PA-Mischungen substituiert werden, die aufgrund ihrer zu geringen Durchlässigkeits- und Absorptionswerten sowie der zu geringen Steifigkeit und der zu hohen Kosten nur bedingt Verwendung im Markt gefunden haben.

Verschiedene Untersuchungen und Tests mit der erfindungsgemäßen Nahrungsmittelfolie haben dabei mehrere Trends erkennen lassen. So ist für eine gute Formstabilität und Steifigkeit im Wesentlichen ein hoher Anteil an PS erforderlich. Im Gegensatz zu PA-basierenden Mischungen steht der hohe Anteil an PS mit der gewünschten hohen Rauchdurchlässigkeit, der Oberflächeneinfärbung des Füllguts und der geringen Bräthaftung nicht entgegen. Denn ein hoher Anteil an PS verringert die mit der Wasserdampfabsorption und -durchlässigkeit einhergehende Rauchdurchlässigkeit sowie die Oberflächenfärbung deutlich weniger als ähnliche PA-Verbunde. Zudem bewirkt ein hoher PS-Anteil, dass die Nahrungsmittelhülle praktisch keine Bräthaftung aufweist.

Weiterhin zeigte sich, dass durch die Zugabe von PEBA die Wasserdampf- und Rauchdurchlässigkeit wesentlich verbessert und zugleich die Schälbarkeit weiter verbessert werden kann. Dabei erlaubt die Zugabe von PEBA eine abschließende Einstellung der gewünschten hohen Sauerstoff- oder Wasserdampf- und damit der Rauchdurchlässigkeit jedoch noch nicht. Auch die Oberflächeneinfärbung lässt sich alleine durch die Zugabe von PEBA noch nicht befriedigend abstimmen. Darüber hinaus verschlechtern sich durch eine fehlerhaft dosierte Zugabe von PEBA die Formstabilität und/oder die Steifigkeit, so dass diesbezüglich ein weiterer Zielkonflikt entsteht.

Es zeigte sich jedoch überraschend, dass durch die weitere Zumischung von PVOH erstmals eine Kunststoffmischung geschaffen wurde, die bei erfindungsgemäßer Auswahl und Dosierung der Mischungsanteile die gewünschte hohe Wasserdampf- und damit auch Rauchdurchlässigkeit aufweist. Ferner werden hierdurch eine hohe Oberflächeneinfärbung und eine wesentlich höhere Steifigkeit erzielt. Zudem wird die Bräthaftung weiter verringert. Die Formstabilität bleibt bei der erfindungsgemäßen Kunststoffmischung zudem optimal einstellbar.

Die erfindungsgemäße räucherbare, lufttrockenbare, schälbare, insbesondere vollautomatisch schälbare, schlauchförmige Nahrungsmittelfolie ist besonders gut für Siedewürste, wie beispielsweise Hot Dogs, geeignet. Sie liegt auch dann faltenfrei am Füllgut an, selbst wenn das Brät manuell, d.h. ohne oder mit nur geringem Druck und ohne Verwendung von geeigneten Füllmaschinen, abgefüllt wurde.

Mit der erfindungsgemäßen räucherbaren, lufttrockenbaren, schälbaren, insbesondere vollautomatisch schälbaren, schlauchförmigen Nahrungsmittelfolie für Lebensmittelverpackungen hergestellte Fleisch- oder Wurstwaren, wie beispielsweise Siedewürste und insbesondere Hot Dogs, sind hervorragend räucherbar und können besonders gut luftgetrocknet werden. Zudem sind sie hervorragend manuell oder maschinell schälbar.

Vorteilhafte Weiterbildungen der erfindungsgemäßen Nahrungsmittelfolie sind Gegenstand der Unteransprüche.

So kann die Kunststoffmischung der ein- oder mehrschichtigen, räucherbaren, lufttrockenbaren, schälbaren, insbesondere vollautomatisch schälbaren, schlauchförmigen Nahrungsmittelfolie in einer ersten Variante
- einen Anteil an PS oder einer Mischung verschiedener PS von 50 bis 99 Gew.-%, und
- einen Anteil an PVOH von 1 bis 50 Gew.-% aufweisen; oder in einer zweiten Variante
- einen Anteil an PS oder einer Mischung verschiedener PS von 70 bis 99 Gew.-%, und
- einen Anteil an PEBA von 1 bis 30 Gew.-% aufweisen; oder in einer dritten Variante
- einen Anteil an PS oder einer Mischung verschiedener PS von 20 bis 98 Gew.-%,
- einen Anteil an PVOH von 1 bis 50 Gew.-%, und
- einen Anteil von PEBA von 1 bis 30 Gew.-% aufweisen.

In einer besonders vorteilhaften Ausführungsform weist die Kunststoffmischung der dritten Variante
- einen Anteil an PS oder einer Mischung verschiedener PS von 55 bis 90 Gew.-%, insbesondere von 60 bis 75 Gew.-%,
- einen Anteil an PVOH von 5 bis 30 Gew.-%, insbesondere von 15 bis 25 Gew.-%, und
- einen Anteil von PEBA von 1 bis 15 Gew.-%, insbesondere von 5 bis 10 Gew.-%
auf.

Diese Ausführungsformen der Erfindung ermöglichen erstmals eine besonders einfache Herstellung einer räucherbaren, lufttrockenbaren, schälbaren, insbesondere vollautomatisch schälbaren, schlauchförmigen Nahrungsmittelfolie im Düsenblasverfahren mit anschließender biaxialer Verstreckung im Tripple-Bubble-Verfahren, die dabei zum ersten Mal den Anforderungen einer räucherbaren schälbaren, insbesondere vollautomatisch schälbaren Wursthülle, beispielsweise für Hot Dogs und dergleichen, in vollem Umfang gerecht wird. Dabei erzielt die Nahrungsmittelfolie, d.h., die Wursthülle oder Lebensmittelfolie, eine maximale Wasserdampfabsorption und Rauchdurchlässigkeit, wobei neben der Sauerstoffdurchlässigkeit die Wasserdampfdurchlässigkeit und - absorption für den Räucherprozess von Bedeutung sind. Zugleich wird eine hohe Steifigkeit erzielt, die für einen guten Raffprozess entscheidend ist. Die für einen optimalen Füllprozess geforderte gute Formstabilität wird mit dieser Nahrungsmittelfolie ebenfalls erzielt.

Zudem werden die geforderte besonders geringe Bräthaftung und die außerordentlich gute Schälbarkeit, die sich auf die späteren Verarbeitungsprozesse auswirken, mit der erfindungsgemäßen Nahrungsmittelfolie problemlos erzielt, da der Grundrohstoff PS im Gegensatz zu PA-basierenden Mischungen praktisch keine Bräthaftung zur Brätmasse eingeht.

Schließlich wird auch die gewünschte hohe Oberflächeneinfärbung des Füllguts, insbesondere der Wurstwaren, die das typische optische Erscheinungsbild von geräucherten Wurstwaren ausmacht, mit der erfindungsgemäßen Nahrungsmittelfolie in hervorragender Weise erreicht.

Zudem kann die Nahrungsmittelfolie eine Folienstärke bzw. -dicke im Bereich von 10 bis 50 *µ*m, vorzugsweise von 15 bis 25 *µ*m, vorzugsweise bei einem Kaliber bis 90 mm, insbesondere bei einem Kaliber im Bereich von 15 bis 40 mm, aufweisen. Damit kann für die erfindungsgemäße Nahrungsmitttelhülle eine Folienstärke mit einer hinreichend hohen Festigkeit und Formstabilität gewählt werden.

In einer weiteren Ausführungsform kann die Nahrungsmittelfolie eine Wasserdampfdurchlässigkeit von wenigstens 0,5 kg/(m²·Tag), vorzugsweise im Bereich von 0,5 bis 0,75 kg/(m²·Tag), bei einer Folienstärke von 20 *µ*m aufweisen (Meßmethode: ISO 15106-1).

Zudem kann die Nahrungsmittelfolie eine Sauerstoffdurchlässigkeit von wenigstens 4.000 cm³/(m²·Tag), vorzugsweise im Bereich von 4.000 bis 6.000 cm³/(m²·Tag) aufweisen (Meßmethode: ISO 15105-1).

So weisen PA-basierende Mischungen zwar eine etwas höhere Wasserdampfdurchlässigkeit im Bereich von 0,8 kg/ (m²·Tag) bis 1,0 kg/(m²·Tag) auf, aber deren Sauerstoffdurchlässigkeit ist mit 100 bis 200 cm³/m² um ein Vielfaches geringer als die der erfindungsgemäßen Nahrungsmittelfolie.

Die außerordentlich hohe Sauerstoffdurchlässigkeit der erfindungsgemäßen Nahrungsmittelfolie, welche bis zu 50 mal höher als die vergleichbarer PA-Mischungen ist, sorgt bei gleichzeitig hoher Steifigkeit dafür, dass sich selbst extrem geringe Folienstärken realisieren lassen. So ist erstmals eine besonders dünne Folie herstellbar, was für das nachfolgende Räuchern und gegebenenfalls Lufttrocknen, aber in jedem Fall für den vollautomatischen Schälprozess, insbesondere für Siedewurst oder Hot Dogs, vorteilhaft ist.

Vorteilhaft ist es ferner, wenn die Nahrungsmittelfolie ein Elastizitätsmodul von wenigstens 3.000 N/mm², vorzugsweise im Bereich von 3.000 bis 3.600 N/mm², aufweist (Meßmethode: ISO 527). Im Vergleich hierzu weisen PA-basierte Mischungen ein Elastizitätsmodul von nur 400 bis 750 N/mm² auf (Meßmethode: ISO 527). Ein derart hoher Elastizitätsmodul steht für eine die erforderliche Raffbarkeit bedingte, hohe Steifigkeit der erfindungsgemäßen Nahrungsmittelfolie. Zudem ist die Steifigkeit ein Maß für eine hervorragende Festigkeit der Nahrungsmittelfolie, welche beim vier- bis neunfachen der herkömmlichen, PA-basierten Mischungen liegt. Damit lassen sich besonders geringe Wandstärken der erfindungsgemäßen Nahrungsmittelfolie realisieren. Hieraus ergeben sich wiederum die Vorteile einer guten Räucherbarkeit als auch einer optimalen, maschinellen Weiterverarbeitbarkeit der Nahrungsmittelfolie.

Darüber hinaus liegen die Kosten von PA-basierenden Mischungen wenigstens 30 bis 50 % über denen vergleichbarer PS-Mischungen.

Zugleich weist die erfindungsgemäße Nahrungsmittelfolie eine, vorzugsweise automatische, Schälbarkeit in einer Geschwindigkeit von wenigstens 0,4 m/s bis wenigstens 1,0 m/s oder über 1,2 m/s, insbesondere von wenigstens 0,5 m/s bis wenigstens 0,7 m/s, auf. Diese außerordentlich gute Schälbarkeit erlaubt ein vollautomatisches Schälen von wenigstens 200 Stück Siedewurst oder Hot Dogs pro Minute, was durch die außergewöhnliche Reiß- und Spleißneigung der Nahrungsmittelfolie bewirkt wird. Darüber hinaus weist die Nahrungsmittelfolie eine sehr gute Formbeständigkeit auf, so dass damit hergestellte Fleisch- oder Wurstwaren nach entsprechenden Räucherschritten und gegebenenfalls auch länger ausgedehnten Lufttrocknungsphasen eine gewünschte, von der Wursthülle vorgeprägte Gestalt besonders gut einhalten.

Somit zeichnet sich die erfindungsgemäße Nahrungsmittelfolie durch eine besonders gute Raffbarkeit aus, die selbst bei kleinen Kalibern mit einem Durchmesser von unter 30 mm ein Verhältnis von gestreckter zu geraffter Länge von wenigstens 100 m im gestreckten Zustand und 20 cm in gerafftem Zustand zulässt.

In einer weiteren Ausführungsform kann die Kunststoffmischung wenigstens ein Silicat aufweisen. Hierdurch wird die Wasserdampf- und Rauchdurchlässigkeit erheblich gesteigert.

Darüber hinaus kann die Kunststoffmischung wenigstens einen Füllstoff, ausgewählt aus einer Gruppe, bestehend aus Maisstärke, Cellulosepulver und Mikroglaskugeln, aufweisen. Der Zusatz eines derartigen Füllstoffs führt ebenfalls zu einer erheblichen Steigerung der Wasserdampf- und Rauchdurchlässigkeit.

Die Kunststoffmischung kann zudem wenigstens einen Füllstoff, ausgewählt aus einer Gruppe, bestehend aus Kreide, Talkum, Salzen und anderen Mineralstoffen, aufweisen. Ein derartiger Zusatz bewirkt eine Verbesserung der Durchlässigkeits- und Absorptionseigenschaften.

Die vorstehend diskutierte Aufgabe wird verfahrenstechnisch durch die Merkmale des Anspruchs 12 gelöst, wobei die vorstehend diskutierten Merkmale und Vorteile analog für das erfindungsgemäße Verfahren gelten.

So werden beim erfindungsgemäßen Verfahren zur Herstellung einer ein- oder mehrschichtigen, räucherbaren, lufttrockenbaren, schälbaren, insbesondere vollautomatisch schälbaren, schlauchförmigen Nahrungsmittelfolie, insbesondere Wursthülle für geräucherte und/oder luftgetrocknete Wurst- oder Fleischwaren, die Wurst- oder Fleischwaren vor dem Räuchern und/oder Lufttrocknen in die Nahrungsmittelfolie eingefüllt. Dabei wird die Nahrungsmittelfolie im Düsenblasverfahren und unter anschließender biaxialer Verstreckung im Tripple-Bubble-Verfahren aus einer homogenen Kunststoffschmelze hergestellt. Ferner wird die Kunststoffschmelze aus PS oder einer Mischung verschiedener PS und PVOH und/oder PEBA hergestellt.

Vorteilhafte Weiterbildungen des erfindungsgemäßen Verfahrens sind Gegenstand der Unteransprüche. Dabei gelten für das erfindungsgemäße Verfahren alle für die vorstehend diskutierte, erfindungsgemäße Nahrungsmittelhülle aufgeführten Vorteile in analoger Weise.

So kann eine erste, zweite oder dritte Variante der Kunststoffmischung ausgewählt werden, wobei die erste Variante
- einen Anteil an PS oder einer Mischung verschiedener PS von 50 bis 99 Gew.-%, und
- einen Anteil an PVOH von 1 bis 50 Gew.-% aufweist; die zweite Variante
- einen Anteil an PS oder einer Mischung verschiedener PS von 70 bis 99 Gew.-%, und
- einen Anteil an PEBA von 1 bis 30 Gew.-% aufweist, oder die dritte Variante
- einen Anteil an PS oder einer Mischung verschiedener PS von 20 bis 98 Gew.-%,
- einen Anteil an PVOH von 1 bis 50 Gew.-%, und
- einen Anteil von PEBA von 1 bis 30 Gew.-% aufweist.

In einer besonders vorteilhaften Ausführungsform des Verfahrens kann zur Herstellung der Nahrungsmittelfolie nach der dritten Variante
- ein Anteil an PS oder einer Mischung verschiedener PS von 55 bis 90 Gew.-%, insbesondere von 60 bis 75 Gew.-%,
- ein Anteil an PVOH von 5 bis 30 Gew.-%, insbesondere von 15 bis 25 Gew.-%, und
- ein Anteil von PEBA von 1 bis 15 Gew.-%, insbesondere von 5 bis 10 Gew.-%
zugeführt werden.

So kann eine Folienstärke der Nahrungsmittelfolie im Bereich von 10 bis 50 *µ*m, vorzugsweise von 15 bis 25 *µ*m, vorzugsweise bei einem Kaliber bis 90 mm, insbesondere bei einem Kaliber im Bereich von 15 bis 40 mm, eingestellt werden.

Ferner kann die Kunststoffmischung derart gewählt werden, dass die Nahrungsmittelfolie eine Wasserdampfdurchlässigkeit von wenigstens 0,5 kg/(m²·Tag), vorzugsweise im Bereich von 0,5 bis 0,75 kg/(m²·Tag), bei einer Folienstärke von 20 *µ*m aufweist.

Zudem kann die Kunststoffmischung derart gewählt werden, dass die Nahrungsmittelfolie eine Sauerstoffdurchlässigkeit von wenigstens 4.000 cm³/(m²·Tag), vorzugsweise im Bereich von 4.000 bis 6.000 cm³/(m²·Tag), aufweist.

In einer weiteren Ausführungsform kann die Kunststoffmischung derart gewählt werden, dass die Nahrungsmittelfolie ein Elastizitätsmodul von wenigstens 3.000 N/mm², vorzugsweise im Bereich von 3.000 bis 3.600 N/mm² aufweist.

Weiter kann die Kunststoffmischung derart gewählt werden, dass die Nahrungsmittelfolie in einer Geschwindigkeit von wenigstens 0,4 m/s bis wenigstens 1,0 m/s oder über 1,2 m/s, insbesondere von wenigstens 0,5 m/s bis wenigstens 0,7 m/s, vorzugsweise automatisch, schälbar ist.

Darüber hinaus kann der Kunststoffmischung wenigstens ein Silicat zugesetzt werden.

Weiter kann der Kunststoffmischung wenigstens ein Füllstoff, ausgewählt aus einer Gruppe, bestehend aus Maisstärke, Cellulosepulver und Mikroglaskugeln, zugesetzt werden.

Schließlich kann der Kunststoffmischung wenigstens ein Füllstoff, ausgewählt aus einer Gruppe, bestehend aus Kreide, Talkum, Salzen und anderen Mineralstoffen, zugesetzt werden.

Die vorstehend beschriebenen, bevorzugten und weitere Kunststoffmischungen wurden im Hause der Anmelderin einer Mehrzahl von Untersuchungen und Testreihen unterworfen, um die für die Herstellung der erfindungsgemäßen räucherbaren, lufttrockenbaren, schälbaren, insbesondere vollautomatisch schälbaren, schlauchförmigen Nahrungsmittelfolie für Lebensmittelverpackungen, wie beispielsweise Wursthüllen, optimalen Kunststoffmischungen zu bestimmen. Dabei wurden aus den Kunststoffmischungen geeignete Kunststoffschmelzen und daraus wiederum die Nahrungsmittelfolien im Düsenblasverfahren hergestellt. Anschließend wurden die Folien im Tripple-Bubble-Verfahren biaxial verstreckt. Schließlich wurden die derart erzeugten und verstreckten Folien auf die vorstehend beschriebenen Eigenschaften untersucht.

In einem bevorzugten Ausführungsbeispiel der räucherbaren, lufttrockenbaren Nahrungsmittelfolie für Lebensmittelverpackungen beträgt der Anteil an PS vorzugsweise 50 bis 90 Ges.-%. Der Anteil an PVOH liegt zwischen 10 und 30 Gew.-%, vorzugsweise zwischen 15 bis 25 Gew.-%. Dementsprechend beträgt ein etwaiger Anteil an PEBA 1 bis 15 Gew.-%, vorzugsweise 5 bis 10 Gew.-%. Die damit angegebenen Mischungsverhältnisse ergeben eine für Wursthülle und insbesondere Schäldärme besonders geeignete Nahrungsmittelfolie.

Die erfindungsgemäße Hülle oder Folie kann ein- oder mehrschichtig ausgebildet werden.

Des Weiteren ist vorgesehen, dass zum Räuchern natürlicher Rauch, flüssiger Rauch oder jede andere denkbare Einsatzform von Rauch oder Rauchersatzstoffen verwendbar ist.

Die vorstehend diskutierten Aspekte und Vorteile der vorliegenden Erfindung lassen sich unter Ausnutzung weiterer Synergieeffekte am besten auf einer Vorrichtung bzw. Anlage derselben Anmelderin zur Herstellung von schälbaren, schlauchförmigen Nahrungsmittelfolien für Lebensmittelverpackungen, wie beispielsweise Wursthüllen, im Düsenblasverfahren erzielen, wenn man dabei zusätzlich die in der Patentschrift DE 199 16 428 B4 der selben Anmelderin offenbarte Einrichtung zum raschen Abkühlen dünner thermoplastischer Schläuche nach deren Extrusion einsetzt. Hierzu kann auch eine entsprechende Weiterentwicklung gemäß der Patentschrift DE 100 48 178 B4 berücksichtigt werden.

Dabei wird die im Düsenblaskopf aus der Kunststoffschmelze erzeugte, schlauchförmige Folie einer intensiven Kühlung unterzogen, wobei die amorphe Struktur der Thermoplaste aus der Kunststoffschmelze erhalten bleibt. Die im Düsenblaskopf aus der Kunststoffschmelze vertikal extrudierte, schlauchförmige Folie wandert zunächst ohne Wandberührung zur Abkühlung in die Kühlvorrichtung, wie dies im Detail in den Druckschriften DE 199 16 428 B4 und DE 100 48 178 B4 beschrieben ist. Hinsichtlich Einzelheiten der Verfahrensweisen, des Aufbaus und der Funktionsweise dieser auch als Kalibriereinrichtung bezeichneten Kühleinrichtung wird zur Vermeidung von Wiederholungen auf den Inhalt der Druckschriften DE 199 16 428 B4 und DE 100 48 178 B4 vollinhaltlich Bezug genommen.

Die schlauchförmige Folie durchläuft danach in der Kühleinrichtung Abstützungen, gegen die sich die Folie infolge eines Differenzdrucks zwischen dem Inneren der schlauchförmigen Folie und dem Kühlmittel abstützt, wobei ein Flüssigkeitsfilm zwischen Folie und Abstützungen erhalten bleibt, so dass ein Ankleben der schlauchförmigen Folie ausgeschlossen ist. Der Durchmesser der Abstützungen nimmt dabei Einfluss auf den Durchmesser der schlauchförmigen Folie, weshalb diese Kühleinrichtung derselben Anmelderin auch als Kalibriereinrichtung bezeichnet wird.

Die vorstehend diskutierten Aspekte und Vorteile der Kunststoffmischung aus PS mit PVOH und/oder PEBA lassen sich am besten in Kombination mit dem Düsenblasverfahren und der nachfolgenden raschen, intensiven Abkühlung mit der hier diskutierten Kalibriereinrichtung erzielen.

## Patentansprüche

1. Ein- oder mehrschichtige, räucherbare, lufttrockenbare, schälbare, insbesondere vollautomatisch schälbare, schlauchförmige Nahrungsmittelfolie, insbesondere Wursthülle für geräucherte und/oder luftgetrocknete Wurst- oder Fleischwaren, wobei die Nahrungsmittelfolie auf einer (Co-)Extrusions-Blasfolienanlage mittels einer Düse eines Blaskopfs zugeführter, (co-)extrudierter Kunststoffe aus einer homogenen Kunststoffschmelze hergestellt und im Tripple-Bubble-Verfahren biaxial verstreckt ist, **dadurch gekennzeichnet, dass**
die homogene Kunststoffschmelze aus einer Kunststoffmischung aus
- Polystyrol oder einer Mischung verschiedener Polystyrole, und
- Polyvinylalkohol, und/oder
- Polyetherblockamid
hergestellt wird.

2. Ein- oder mehrschichtige, räucherbare, lufttrockenbare, schälbare, insbesondere vollautomatisch schälbare, schlauchförmige Nahrungsmittelfolie nach Anspruch 1, **dadurch gekennzeichnet, dass** die Kunststoffmischung
in einer ersten Variante
- einen Anteil an Polystyrol oder einer Mischung verschiedener Polystyrole von 50 bis 99 Gew.-%, und
- einen Anteil an Polyvinylalkohol von 1 bis 50 Gew.-%
aufweist; oder
in einer zweiten Variante
- einen Anteil an Polystyrol oder einer Mischung verschiedener Polystyrole von 70 bis 99 Gew.-%, und
- einen Anteil an Polyetherblockamid von 1 bis 30 Gew.-%
aufweist; oder
in einer dritten Variante
- einen Anteil an Polystyrol oder einer Mischung verschiedener Polystyrole von 20 bis 98 Gew.-%,
- einen Anteil an Polyvinylalkohol von 1 bis 50 Gew.-%, und
- einen Anteil von Polyetherblockamid von 1 bis 30 Gew.-%
aufweist.

3. Ein- oder mehrschichtige, räucherbare, lufttrockenbare, schälbare, insbesondere vollautomatisch schälbare, schlauchförmige Nahrungsmittelfolie nach Anspruch 2, dritte Variante, **dadurch gekennzeichnet, dass** die Kunststoffmischung
- einen Anteil an Polystyrol oder einer Mischung verschiedener Polystyrole von 55 bis 90 Gew.-%, insbesondere von 60 bis 75 Gew.-%,
- einen Anteil an Polyvinylalkohol von 5 bis 30 Gew.-%, insbesondere von 15 bis 25 Gew.-%, und
- einen Anteil von Polyetherblockamid von 1 bis 15 Gew.-%, insbesondere von 5 bis 10 Gew.-%
aufweist.

4. Ein- oder mehrschichtige, räucherbare, lufttrockenbare, schälbare, insbesondere vollautomatisch schälbare, schlauchförmige Nahrungsmittelfolie nach einem der Ansprüche 1 bis 3, **dadurch gekennzeichnet, dass** die Nahrungsmittelfolie eine Folienstärke im Bereich von 10 bis 50 *µ*m, vorzugsweise von 15 bis 25 *µ*m, vorzugsweise bei einem Kaliber bis 90 mm, insbesondere bei einem Kaliber im Bereich von 15 bis 40 mm, aufweist.

5. Ein- oder mehrschichtige, räucherbare, lufttrockenbare, schälbare, insbesondere vollautomatisch schälbare, schlauchförmige Nahrungsmittelfolie nach einem der Ansprüche 1 bis 4, **dadurch gekennzeichnet, dass** die Nahrungsmittelfolie eine Wasserdampfdurchlässigkeit von wenigstens 0,5 kg/(m²·Tag), vorzugsweise im Bereich von 0,5 bis 0,75 kg/(m²·Tag), bei einer Folienstärke von 20 *µ*m aufweist.

6. Ein- oder mehrschichtige, räucherbare, lufttrockenbare, schälbare, insbesondere vollautomatisch schälbare, schlauchförmige Nahrungsmittelfolie nach einem der Ansprüche 1 bis 5, **dadurch gekennzeichnet, dass** die Nahrungsmittelfolie eine Sauerstoffdurchlässigkeit von wenigstens 4.000 cm³/(m²·Tag), vorzugsweise im Bereich von 4.000 bis 6.000 cm³/(m²·Tag), aufweist.

7. Ein- oder mehrschichtige, räucherbare, lufttrockenbare, schälbare, insbesondere vollautomatisch schälbare, schlauchförmige Nahrungsmittelfolie nach einem der Ansprüche 1 bis 6, **dadurch gekennzeichnet, dass** die Nahrungsmittelfolie ein Elastizitätsmodul von wenigstens 3.000 N/mm², vorzugsweise im Bereich von 3.000 bis 3.600 N/mm², aufweist.

8. Ein- oder mehrschichtige, räucherbare, lufttrockenbare, schälbare, insbesondere vollautomatisch schälbare, schlauchförmige Nahrungsmittelfolie nach einem der Ansprüche 1 bis 7, **dadurch gekennzeichnet, dass** die Nahrungsmittelfolie eine, vorzugsweise automatische, Schälbarkeit in einer Geschwindigkeit von wenigstens 0,4 m/s bis 1,0 m/s, insbesondere von wenigstens 0,5 m/s bis 0,7 m/s, aufweist.

9. Ein- oder mehrschichtige, räucherbare, lufttrockenbare, schälbare, insbesondere vollautomatisch schälbare, schlauchförmige Nahrungsmittelfolie nach einem der Ansprüche 1 bis 8, **dadurch gekennzeichnet, dass** die Kunststoffmischung wenigstens ein Silicat aufweist.

10. Ein- oder mehrschichtige, räucherbare, lufttrockenbare, schälbare, insbesondere vollautomatisch schälbare, schlauchförmige Nahrungsmittelfolie nach einem der Ansprüche 1 bis 9, **dadurch gekennzeichnet, dass** die Kunststoffmischung wenigstens einen Füllstoff, ausgewählt aus einer Gruppe, bestehend aus Maisstärke, Cellulosepulver und Mikroglaskugeln, aufweist.

11. Ein- oder mehrschichtige, räucherbare, lufttrockenbare, schälbare, insbesondere vollautomatisch schälbare, schlauchförmige Nahrungsmittelfolie nach einem der Ansprüche 1 bis 10, **dadurch gekennzeichnet, dass** die Kunststoffmischung wenigstens einen Füllstoff, ausgewählt aus einer Gruppe, bestehend aus Kreide, Talkum, Salzen und anderen Mineralstoffen, aufweist.

12. Verfahren zur Herstellung einer ein- oder mehrschichtigen, räucherbaren, lufttrockenbaren, schälbare, insbesondere vollautomatisch schälbare, schlauchförmigen Nahrungsmittelfolie, insbesondere Wursthülle für geräucherte und/oder luftgetrocknete Wurst- oder Fleischwaren, wobei die Wurst- oder Fleischwaren vor dem Räuchern und/oder Lufttrocknen in die Nahrungsmittelfolie eingefüllt werden,
wobei die Nahrungsmittelfolie im Düsenblasverfahren und unter anschließender biaxialer Verstreckung im Tripple-Bubble-Verfahren aus einer homogenen Kunststoffschmelze hergestellt wird,
**dadurch gekennzeichnet, dass**
die Kunststoffschmelze aus
- Polystyrol oder einer Mischung verschiedener Polystyrole, und
- Polyvinylalkohol, und/oder
- Polyetherblockamid
hergestellt wird.

13. Verfahren nach Anspruch 12, **dadurch gekennzeichnet, dass** eine erste, zweite oder dritte Variante der Kunststoffmischung ausgewählt wird,
wobei die erste Variante
- einen Anteil an Polystyrol oder einer Mischung verschiedener Polystyrole von 50 bis 99 Gew.-%, und
- einen Anteil an Polyvinylalkohol von 1 bis 50 Gew.-%
aufweist; oder
wobei die zweite Variante
- einen Anteil an Polystyrol oder einer Mischung verschiedener Polystyrole von 70 bis 99 Gew.-%, und
- einen Anteil an Polyetherblockamid von 1 bis 30 Gew.-%
aufweist; oder
wobei die dritte Variante
- einen Anteil an Polystyrol oder einer Mischung verschiedener Polystyrole von 20 bis 98 Gew.-%,
- einen Anteil an Polyvinylalkohol von 1 bis 50 Gew.-%, und
- einen Anteil von Polyetherblockamid von 1 bis 30 Gew.-%
aufweist.

14. Verfahren nach Anspruch 13, dritte Variante, **dadurch gekennzeichnet, dass** zur Herstellung der Nahrungsmittelfolie
- ein Anteil an Polystyrol oder einer Mischung verschiedener Polystyrole von 55 bis 90 Gew.-%, insbesondere von 60 bis 75 Gew.-%,
- ein Anteil an Polyvinylalkohol von 5 bis 30 Gew.-%, insbesondere von 15 bis 25 Gew.-%, und
- ein Anteil von Polyetherblockamid von 1 bis 15 Gew.-%, insbesondere von 5 bis 10 Gew.-% zugeführt wird.

15. Verfahren nach einem der Ansprüche 12 bis 14, **dadurch gekennzeichnet, dass** eine Folienstärke der Nahrungsmittelfolie im Bereich von 10 bis 50 *µ*m, vorzugsweise von 15 bis 25 *µ*m, vorzugsweise bei einem Kaliber bis 90 mm, insbesondere bei einem Kaliber im Bereich von 15 bis 40 mm, eingestellt wird.

16. Verfahren nach einem der Ansprüche 12 bis 15, **dadurch gekennzeichnet, dass** die Kunststoffmischung derart gewählt wird, dass die Nahrungsmittelfolie eine Wasserdampfdurchlässigkeit von wenigstens 0,5 kg/(m²·Tag), vorzugsweise im Bereich von 0,5 bis 0,75 kg/(m²·Tag), bei einer Folienstärke von 20 *µ*m aufweist.

17. Verfahren nach einem der Ansprüche 12 bis 16, **dadurch gekennzeichnet, dass** die Kunststoffmischung derart gewählt wird, dass die Nahrungsmittelfolie eine Sauerstoffdurchlässigkeit von wenigstens 4.000 cm³/(m²·Tag), vorzugsweise im Bereich von 4.000 bis 6.000 cm³/(m²·Tag), aufweist.

18. Verfahren nach einem der Ansprüche 12 bis 17, **dadurch gekennzeichnet, dass** die Kunststoffmischung derart gewählt wird, dass die Nahrungsmittelfolie ein Elastizitätsmodul von wenigstens 3.000 N/mm², vorzugsweise im Bereich von 3.000 bis 3.600 N/mm² aufweist.

19. Verfahren nach einem der Ansprüche 12 bis 18, **dadurch gekennzeichnet, dass** die Kunststoffmischung derart gewählt wird, dass die Nahrungsmittelfolie in einer Geschwindigkeit von wenigstens 0,4 m/s bis 1,0 m/s, insbesondere von wenigstens 0,5 m/s bis 0,7 m/s, vorzugsweise automatisch, schälbar ist.

20. Verfahren nach einem der Ansprüche 12 bis 19, **dadurch gekennzeichnet, dass** der Kunststoffmischung wenigstens ein Silicat zugesetzt wird.

21. Verfahren nach einem der Ansprüche 12 bis 19, **dadurch gekennzeichnet, dass** der Kunststoffmischung wenigstens ein Füllstoff, ausgewählt aus einer Gruppe, bestehend aus Maisstärke, Cellulosepulver und Mikroglaskugeln, zugesetzt wird.

22. Verfahren nach einem der Ansprüche 12 bis 19, **dadurch gekennzeichnet, dass** der Kunststoffmischung wenigstens ein Füllstoff, ausgewählt aus einer Gruppe, bestehend aus Kreide, Talkum, Salzen und anderen Mineralstoffen, zugesetzt wird.

## Claims

1. A single-layer or multilayer tubular food film that can be smoked, air-dried, peeled, in particular peeled in a fully automated manner, in particular a sausage casing for smoked and/or air-dried sausage or meat goods, wherein the food film is manufactured of a homogeneous molten plastic material in a (co-)extrusion film blow molding plant by means of (co-)extruded plastics supplied to a nozzle of a blow head and biaxially stretched in the triple-bubble process,
**characterized in that**
the homogeneous molten plastic material is produced of a plastic blend of
- polystyrene or a blend of various polystyrenes, and
- polyvinyl alcohol, and/or
- polyether block amide.

2. The single-layer or multilayer tubular food film that can be smoked, air-dried and peeled, in particular peeled in a fully automated manner according to claim 1, **characterized in that** the plastic blend
in a first variant includes
- a proportion of polystyrene or a blend of various polystyrenes from 50 to 99 % (wt.), and
- a proportion of polyvinyl alcohol from 1 to 50 % (wt.);
or
in a second variant includes
- a proportion of polystyrene or a blend of various polystyrenes from 70 to 99 % (wt.), and
- a proportion of polyether block amide from 1 to 30 % (wt.);
or
in a third variant includes
- a proportion of polystyrene or a blend of various polystyrenes from 20 to 98 % (wt.),
- a proportion of polyvinyl alcohol from 1 to 50 % (wt.), and
- a proportion of polyether block amide from 1 to 30 % (wt.).

3. The single-layer or multilayer tubular food film that can be smoked, air-dried and peeled, in particular peeled in a fully automated manner according to claim 2, third variant, **characterized in that** the plastic blend includes
- a proportion of polystyrene or a blend of various polystyrenes from 55 to 90 % (wt.), in particular from 60 to 75 % (wt.),
- a proportion of polyvinyl alcohol from 5 to 30 % (wt.), in particular from 15 to 25 % (wt.), and
- a proportion of polyether block amide from 1 to 15 % (wt.), in particular from 5 to 10%(wt.).

4. The single-layer or multilayer tubular food film that can be smoked, air-dried and peeled, in particular peeled in a fully automated manner according to any one of claims 1 to 3, **characterized in that** the food film exhibits a film thickness in a range from 10 to 50 µm, preferably from 15 to 25 µm, preferably at a caliber of up to 90 mm, in particular at a caliber in a range from 15 to 40 mm.

5. The single-layer or multilayer tubular food film that can be smoked, air-dried and peeled, in particular peeled in a fully automated manner according to any one of claims 1 to 4, **characterized in that** the food film exhibits a water vapor permeability of at least 0.5 kg/(m²·day), preferably in a range from 0.5 to 0.75 kg/(m²·day), at a film thickness of 20 µm.

6. The single-layer or multilayer tubular food film that can be smoked, air-dried and peeled, in particular peeled in a fully automated manner according to any one of claims 1 to 5, **characterized in that** the food film exhibits an oxygen permeability of at least 4,000 cm³/(m²·day), preferably in a range from 4,000 to 6,000 cm³/(m²·day).

7. The single-layer or multilayer tubular food film that can be smoked, air-dried and peeled, in particular peeled in a fully automated manner according to any one of claims 1 to 6, **characterized in that** the food film exhibits a modulus of elasticity of at least 3,000 N/mm², preferably in a range from 3,000 to 3.600 N/mm².

8. The single-layer or multilayer tubular food film that can be smoked, air-dried and peeled, in particular peeled in a fully automated manner according to any one of claims 1 to 7, **characterized in that** the food film exhibits a - preferably automatic - peelability at a velocity of at least 0.4 m/s to 1.0 m/s, in particular of at least 0.5 m/s to 0.7 m/s.

9. The single-layer or multilayer tubular food film that can be smoked, air-dried and peeled, in particular peeled in a fully automated manner according to any one of claims 1 to 8, **characterized in that** the plastic blend includes at least one silicate.

10. The single-layer or multilayer tubular food film that can be smoked, air-dried and peeled, in particular peeled in a fully automated manner according to any one of claims 1 to 9, **characterized in that** the plastic blend includes at least one filler selected from a group consisting of corn starch, cellulose powder and micro glass beads.

11. The single-layer or multilayer tubular food film that can be smoked, air-dried and peeled, in particular peeled in a fully automated manner according to any one of claims 1 to 10, **characterized in that** the plastic blend includes at least one filler selected from a group consisting of chalk, talcum, salts and other mineral substances.

12. A method for the manufacture of a single-layer or multilayer tubular food film that can be smoked, air-dried and peeled, in particular peeled in a fully automated manner, in particular a sausage casing for smoked and/or air-dried sausage or meat goods, wherein the sausage or meat goods are filled into the food film prior to smoking and/or air-drying,
the food film being manufactured of a homogeneous molten plastic material in the nozzle blast drawing process and under subsequent biaxial stretching in the triple-bubble process,
**characterized in that**
the molten plastic material is produced of
- polystyrene or a blend of various polystyrenes, and
- polyvinyl alcohol, and/or
- polyether block amide.

13. The method according to claim 12, **characterized in that** a first, second or third variant of the plastic blend is selected
wherein the first variant includes
- a proportion of polystyrene or a blend of various polystyrenes from 50 to 99 % (wt.), and
- a proportion of polyvinyl alcohol from 1 to 50 % (wt.);
or
wherein the second variant includes
- a proportion of polystyrene or a blend of various polystyrenes from 70 to 99 % (wt.), and
- a proportion of polyether block amide from 1 to 30 % (wt.);
or
wherein the third variant includes
- a proportion of polystyrene or a blend of various polystyrenes from 20 to 98 % (wt.),
- a proportion of polyvinyl alcohol from 1 to 50 % (wt.), and
- a proportion of polyether block amide from 1 to 30 % (wt.).

14. The method according to claim 13, third variant, **characterized in that** for the manufacture of the food film,
- a proportion of polystyrene or a blend of various polystyrenes from 55 to 90 % (wt.), in particular from 60 to 75 % (wt.),
- a proportion of polyvinyl alcohol from 5 to 30 % (wt.), in particular from 15 to 25 % (wt.), and
- a proportion of polyether block amide from 1 to 15 % (wt.), in particular from 5 to 10 % (wt.)
is supplied.

15. The method according to any one of claims 12 to 14, **characterized in that** a film thickness of the food film is adjusted in a range from 10 to 50 µm, preferably from 15 to 25 µm, preferably at a caliber of up to 90 mm, in particular at a caliber in a range from 15 to 40 mm.

16. The method according to any one of claims 12 to 15, **characterized in that** the plastic blend is selected such that the food film exhibits a water vapor permeability of at least 0.5 kg/(m²·day), preferably in a range from 0.5 to 0.75 kg/(m²·day), at a film thickness of 20 µm.

17. The method according to any one of claims 12 to 16, **characterized in that** the plastic blend is selected such that the food film exhibits an oxygen permeability of at least 4,000 cm³/(m²·day), preferably in a range from 4,000 to 6,000 cm³/(m²·day).

18. The method according to any one of claims 12 to 17, **characterized in that** the plastic blend is selected such that the food film exhibits a modulus of elasticity of at least 3,000 N/mm², preferably in a range from 3,000 to 3.600 N/mm².

19. The method according to any one of claims 12 to 18, **characterized in that** the plastic blend is selected such that the food film can be peeled, preferably in an automated manner, at a velocity of at least 0.4 m/s to 1.0 m/s, in particular of at least 0.5 m/s to 0.7 m/s.

20. The method according to any one of claims 12 to 19, **characterized in that** at least one silicate is added to the plastic blend.

21. The method according to any one of claims 12 to 19, **characterized in that** at least one filler selected from a group consisting of corn starch, cellulose powder and micro glass beads is added to the plastic blend.

22. The method according to any one of claims 12 to 19, **characterized in that** at least one filler selected from a group consisting of chalk, talcum, salts and other mineral substances is added to the plastic blend.

## Revendications

1. Film alimentaire tubulaire mono ou multicouches, pouvant être fumé, séché à l'air, pelé, notamment pelé entièrement automatiquement, en particulier enveloppe pour saucisses ou charcuteries fumées et/ou séchées à l'air, le film alimentaire étant fabriqué à partir d'une matière plastique fondue homogène sur une installation de films soufflés par (co-)extrusion au moyen d'une buse d'une tête de soufflage de matières plastiques (co-)extrudées amenées et étiré biaxialement dans un procédé triple bulle,
**caractérisé en ce que**
la matière plastique fondue homogène est fabriquée à partir d'un mélange de plastiques constitué de
- polystyrène ou d'un mélange de différents polystyrènes, et
- alcool polyvinylique, et/ou
- amide à blocs de polyéther.

2. Film alimentaire tubulaire mono ou multicouches, pouvant être fumé, séché à l'air, pelé, notamment pelé entièrement automatiquement, selon la revendication 1, **caractérisé en ce que** le mélange de matières plastiques comprend
dans une première variante
- une proportion de polystyrène ou d'un mélange de différents polystyrènes de 50 à 99 % en poids, et
- une proportion d'alcool polyvinylique de 1 à 50 % en poids;
ou
dans une deuxième variante
- une proportion de polystyrène ou d'un mélange de différents polystyrènes de 70 à 99 % en poids, et
- une proportion d'amide à blocs de polyéther de 1 à 30 % en poids;
ou
dans une troisième variante
- une proportion de polystyrène ou d'un mélange de différents polystyrènes de 20 à 98 % en poids,
- une proportion d'alcool polyvinylique de 1 à 50 % en poids, et
- une proportion d'amide à blocs de polyéther de 1 à 30 % en poids.

3. Film alimentaire tubulaire mono ou multicouches, pouvant être fumé, séché à l'air, pelé, notamment pelé entièrement automatiquement, selon la revendication 2, troisième variante, **caractérisé en ce que** le mélange de matières plastiques comprend
- une proportion de polystyrène ou d'un mélange de différents polystyrènes de 55 à 90 % en poids, en particulier de 60 à 75 % en poids,
- une proportion d'alcool polyvinylique de 5 à 30 % en poids, en particulier de 15 à 25 % en poids, et
- une proportion d'amide à blocs de polyéther de 1 à 15 % en poids, en particulier de 5 à 10 % en poids.

4. Film alimentaire tubulaire mono ou multicouches, pouvant être fumé, séché à l'air, pelé, notamment pelé entièrement automatiquement, selon l'une des revendications 1 à 3, **caractérisé en ce que** le film alimentaire présente une épaisseur de film dans la plage de 10 à 50 µm, de préférence de 15 à 25 µm, de préférence pour un calibre allant jusqu'à 90 mm, en particulier pour un calibre situé dans la plage allant de 15 à 40 mm.

5. Film alimentaire tubulaire mono ou multicouches, pouvant être fumé, séché à l'air, pelé, notamment pelé entièrement automatiquement, selon l'une des revendications 1 à 4, **caractérisé en ce que** le film alimentaire présente une perméabilité à la vapeur d'eau d'au moins 0,5 kg/(m²•jour), de préférence dans la plage allant de 0,5 à 0,75 kg/(m²•jour), pour une épaisseur de film de 20 µm.

6. Film alimentaire tubulaire mono ou multicouches, pouvant être fumé, séché à l'air, pelé, notamment pelé entièrement automatiquement, selon l'une des revendications 1 à 5, **caractérisé en ce que** le film alimentaire présente une perméabilité à l'oxygène d'au moins 4000 cm³/(m²•jour), de préférence dans la plage allant de 4000 à 6000 cm³/(m²•jour).

7. Film alimentaire tubulaire mono ou multicouches, pouvant être fumé, séché à l'air, pelé, notamment pelé entièrement automatiquement, selon l'une des revendications 1 à 6, **caractérisé en ce que** le film alimentaire présente un module d'élasticité d'au moins 3000 N/mm², de préférence dans la plage allant de 3000 N/mm² à 3600 N/mm².

8. Film alimentaire tubulaire mono ou multicouches, pouvant être fumé, séché à l'air, pelé, notamment pelé entièrement automatiquement, selon l'une des revendications 1 à 7, **caractérisé en ce que** le film alimentaire présente une pelabilité, de préférence entièrement automatique, à une vitesse d'au moins 0,4 m/s à 1,0 m/s, en particulier d'au moins 0,5 m/s à 0,7 m/s.

9. Film alimentaire tubulaire mono ou multicouches, pouvant être fumé, séché à l'air, pelé, notamment pelé entièrement automatiquement, selon l'une des revendications 1 à 8, **caractérisé en ce que** le mélange de matières plastiques présente au moins un silicate.

10. Film alimentaire tubulaire mono ou multicouches, pouvant être fumé, séché à l'air, pelé, notamment pelé entièrement automatiquement, selon l'une des revendications 1 à 9, **caractérisé en ce que** le mélange de matières plastiques présente au moins une charge, choisie dans un groupe constitué par l'amidon de maïs, la poudre de cellulose et les microbilles de verre.

11. Film alimentaire tubulaire mono ou multicouches, pouvant être fumé, séché à l'air, pelé, notamment pelé entièrement automatiquement, selon l'une des revendications 1 à 10, **caractérisé en ce que** le mélange de matières plastiques présente au moins une charge, choisie dans un groupe constitué par la craie, le talc, les sels et autres minéraux.

12. Procédé de fabrication d'un film alimentaire tubulaire mono ou multicouches, pouvant être fumé, séché à l'air, pelé, notamment pelé entièrement automatiquement, en particulier enveloppe pour saucisses ou charcuteries fumées et/ou séchées à l'air, les saucisses ou charcuteries étant chargées dans le film alimentaire avant le fumage et/ou le séchage à l'air,
le film alimentaire étant fabriqué à partir d'une matière plastique fondue homogène dans un procédé de soufflage à buses et sous étirement biaxial consécutif dans un procédé triple bulle,
**caractérisé en ce que**
la matière plastique fondue homogène est fabriquée à partir d'un mélange de plastiques constitué de:
- polystyrène ou d'un mélange de différents polystyrènes, et
- alcool polyvinylique, et/ou
- amide à blocs de polyéther.

13. Procédé selon la revendication 12, **caractérisé en ce qu'**une première, une deuxième ou une troisième variante du mélange de matières plastiques est choisie,
la première variante présentant
- une proportion de polystyrène ou d'un mélange de différents polystyrènes de 50 à 99 % en poids, et
- une proportion d'alcool polyvinylique de 1 à 50 % en poids;
ou
la deuxième variante présentant
- une proportion de polystyrène ou d'un mélange de différents polystyrènes de 70 à 99 % en poids, et
- une proportion d'amide à blocs de polyéther de 1 à 30 % en poids;
ou
la troisième variante présentant
- une proportion de polystyrène ou d'un mélange de différents polystyrènes de 20 à 98 % en poids,
- une proportion d'alcool polyvinylique de 1 à 50 % en poids, et
- une proportion d'amide à blocs de polyéther de 1 à 30 % en poids.

14. Procédé selon la revendication 13, troisième variante, **caractérisé en ce que**, pour fabriquer le film alimentaire, on amène
- une proportion de polystyrène ou d'un mélange de différents polystyrènes de 55 à 90 % en poids, en particulier de 60 à 75 % en poids,
- une proportion d'alcool polyvinylique de 5 à 30 % en poids, en particulier de 15 à 25 % en poids, et
- une proportion d'amide à blocs de polyéther de 1 à 15 % en poids, en particulier de 5 à 10 % en poids.

15. Procédé selon l'une des revendications 12 à 14, **caractérisé en ce qu'**une épaisseur du film alimentaire est ajustée dans la plage de 10 à 50 µm, de préférence de 15 à 25 µm, de préférence pour un calibre allant jusqu'à 90 mm, en particulier pour un calibre situé dans la plage allant de 15 à 40 mm.

16. Procédé selon l'une des revendications 12 à 15, **caractérisé en ce que** le mélange de matières plastiques est choisi de sorte que le film alimentaire présente une perméabilité à la vapeur d'eau d'au moins 0,5 kg/(m²•jour), de préférence dans la plage allant de 0,5 à 0,75 kg/(m²•jour), pour une épaisseur de film de 20 µm.

17. Procédé selon l'une des revendications 12 à 16, **caractérisé en ce que** le mélange de matières plastiques est choisi de sorte que le film alimentaire présente une perméabilité à l'oxygène d'au moins 4000 cm³/(m²•jour), de préférence dans la plage allant de 4000 à 6000 cm³/(m²•jour).

18. Procédé selon l'une des revendications 12 à 17, **caractérisé en ce que** le mélange de matières plastiques est choisi de sorte que le film alimentaire présente un module d'élasticité d'au moins 3000 N/mm², de préférence dans la plage allant de 3000 N/mm² à 3600 N/mm².

19. Procédé selon l'une des revendications 12 à 18, **caractérisé en ce que** le mélange de matières plastiques est choisi de sorte que le film alimentaire présente une pelabilité, de préférence entièrement automatique, à une vitesse d'au moins 0,4 m/s à 1,0 m/s, en particulier d'au moins 0,5 m/s à 0,7 m/s.

20. Procédé selon l'une des revendications 12 à 19, **caractérisé en ce que** le mélange de matières plastiques est additionné d'au moins un silicate.

21. Procédé selon l'une des revendications 12 à 19, **caractérisé en ce que** le mélange de matières plastiques est additionné d'au moins une charge, choisie dans un groupe constitué par l'amidon de maïs, la poudre de cellulose et les microbilles de verre.

22. Procédé selon l'une des revendications 12 à 19, **caractérisé en ce que** le mélange de matières plastiques est additionné d'au moins une charge, choisie dans un groupe constitué par la craie, le talc, les sels et autres minéraux.
